# EUROPEAN PATENT APPLICATION

(11) **EP 0 601 969 A1**
(43) Date of publication of application: **15.06.1994**
(21) Application number: 93810811.5
(22) Date of filing: 23.11.1993
(51) Int. Cl.: C09J 131/04, C09J 123/08, B32B 3/12, B32B 7/12

(54) **A method of manufacturing a thermoplastic honeycomb core, an adhesive used therefor and the core made thereby**

(30) Priority: 02.12.1992 US 984502
(71) Applicant: CIBA-GEIGY AG, CH-4002 Basel (CH)
(72) Inventor: Danver, Dale C., Miami Beach, FL 33139 (US); Cao, Ligun, Miami, FL 33138 (US); Pena, Orestes, Miami, FL 33177 (US)

(57) **Abstract**

An adhesive composition comprising
(A) 60-99 % by weight, based on the total composition, of a vinyl acetate/ethylene-copolymer;
(B) 0-30 % by weight, based on the total composition, of a plasticizer;
(C) 0-5 % by weight, based on the total composition, of a thickening agent; and
(D) 0-5 % by weight, based on the total composition, of a coloring agent;

with the proviso that at least 1 % by weight of the total composition consists of said plasticizer or said thickening agent or a mixture of said plasticizer and said thickening agent,
which is able to chemically bond thermoplastic materials at temperatures up to 100 °C and cures at room temperature with a short bond development time, is suitable for the production of honeycomb core.

## Description

The present invention relates to an adhesive composition which will cure at room temperature and chemically bond thermoplastic at temperatures up to 100 °C and to a process of manufacturing honeycomb core, and particular honeycomb core made from TYVEX®, a spunbonded olefin sheet made from high density polyethylene fibers.

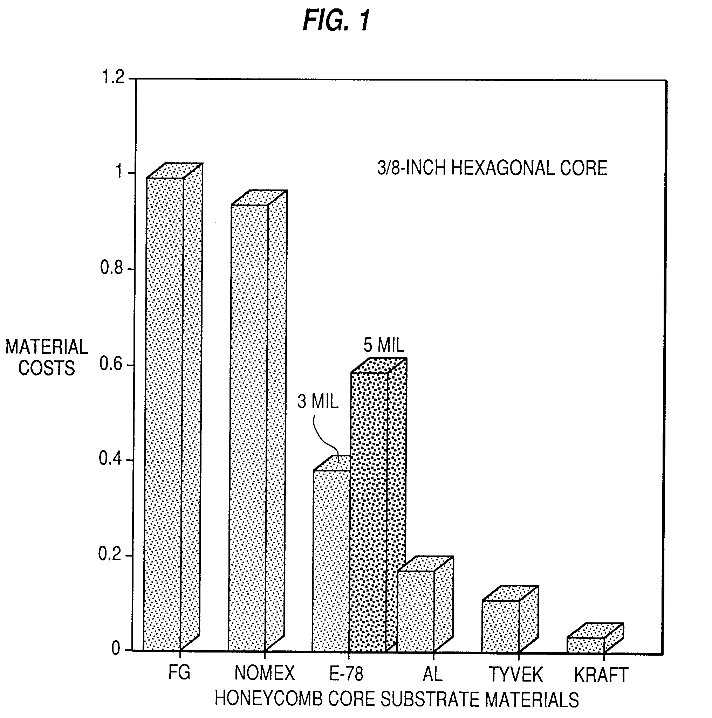

TYVEK® spunbonded olefin sheet is a product that was introduced by E.I. DuPont de Nemours & Co. in 1957, and is made from high density polyethylene (HDPE) fibers. TYVEK® is stronger than paper, but less expensive and more versatile than fabrics. It has excellent physical and chemical properties in that it is strong, tough, lightweight, flexible and resistant to water, chemicals, abrasion and aging. These properties make TYVEK® ideal for a broad range of applications, including honeycomb substrate materials. It is less expensive than NOMEX® polyamide substrate and has better water resistance than Kraft paper substrate. Also, TYVEK® has a melting point of 135 °C (275 °F). A comparison of the costs of different honeycomb core substrates is shown in Fig. 1.

Thermoplastic honeycomb core has been manufactured by using a fusion method. With this method, the nodes of thermoplastic webs are pressurized and heated to cause the node to fuse. U.S. Patent No. 3,356,555 discloses a batch method of preparing honeycomb core. Thermoplastic sheet is heated and pressurized by passing the thermoplastic sheet through a squirrel cage roller containing hexagonal bars and a plurality hexagonal major bars on a fixed bed to produce a corrugated web. The corrugated thermoplastic web is thus placed on the major bars of a bed. The minor bars are placed in the nodes above the web. A second corrugated web is then located with its nodes adjacent to the antinodes of the first web. A second group of minor bars is placed on top, and the procedure is repeated until the desired dimension of the honeycomb is achieved. The structure is then pressed and heated to fuse the honeycomb nodes.

A batchwise method is described in GB-A 2,188,866. This method is similar to to the batch method disclosed in U.S. Patent No. 3,356,555. The difference is that the pressure and heat for the corrugated thermoplastic sheet fusion in GB-A 2,188,866 are applied section by section. This process thus requires pressurizing and heating the entire newly formed honeycomb structure.

The above-discussed methods have a number of disadvantages. First, the methods require numerous layers of expensive metal formers. A 4 ft · 4 ft (1.22 m · 1.22m) block of 1/8 inch (3.2 mm) cell honeycomb requires more than 1400 metal formers. Further, the lay up process is extremely time consuming. Lengthy pressurizing, heating and cooling cycles for the entire honeycomb structure, in order to enable thermoplastic fusion and adherence, are required. Furthermore, it is extremely difficult to align the honeycomb assembly, especially under pressure during cure cycles. Errors made in one layer are magnified by each successive cell layer.

It has been attempted to manufacture honeycomb core out of TYVEK® by a chemical bond and expanding method since the 1970's. However, all research and attempts have failed in expanding TYVEK® block because of nodal line separation and TYVEK® paper failure.

Accordingly, it is an object of the present invention to provide a method of manufacturing TYVEK® honeycomb core by the chemical bonding and expanding method. Furthermore, it is an object of the present invention to provide a proper formulation of a multi-component adhesive for nodal line bonding such that nodal line separationwill be prevented, and such that the honeycomb core can be expanded by the expansion method.

In a first feature according to the present invention, there is provided a multi-component adhesive formulation which will cure at room temperature and chemically bond thermoplastic at temperatures up to 100 °C.

Specifically, the invention provides an adhesive composition comprising
(A) 60-99 % by weight, based on the total composition, of a vinyl acetate/ethylene-copolymer;
(B) 0-30 % by weight, based on the total composition, of a plasticizer;
(C) 0-5 % by weight, based on the total composition, of a thickening agent; and
(D) 0-5 % by weight, based on the total composition, of a coloring agent;

with the proviso that at least 1 % by weight of the total composition consists of said plasticizer or said thickening agent or a mixture of said plasticizer and said thickening agent.

The vinyl acetate/ethylene copolymer is the adhesive component of the adhesive formulation, and is provided as a synthetic aqueous emulsion polymer, or latex. The vinyl acetate/ethylene copolymer, however, is too liquid to be used by itself in printing nodal lines on thermoplastic sheet material for honeycomb cores. Accordingly, appropriate amounts of components B and C are added, component B being a plasticizer used to control the hardness of the adhesive formulation, and component C being a thickening agent used to control the viscosity of the adhesive. The thickening agent is especially important. While the plasticizer is quite useful, it could be done without. However, there should be some thickening agent in order to control the viscosity of the adhesive formulation. But note that if the above plasticizer is provided in amounts of 20 % by weight or greater, it begins to act as a thickening agent, and would effectively operate as such, and in this manner component C could be avoided.

It is advantageous to have at least a minimal amount of a coloring agent when the adhesive formulation is used to print nodal lines on thermoplastic sheets for layup and expansion into a honeycomb core, so that the nodal lines will have colour and contrast with the thermoplastic sheets.

The above multi-component adhesive formulation has the properties of being able to chemically bond thermoplastic materials at temperatures up to 100 °C. Further, the adhesive is able to cure at room temperature with a short bond development time.

Preferably, the adhesive composition according to the invention comprises both said plasticizer and said thickening agent.

In general, all compounds which are known to the person skilled in the art as plasticizers can be used as component (B).

Suitable plasticizers are, for example, phthalates, like dimethyl phthalate, diethyl phthalate, dipropyl phthalate and dibutyl phthalate; adipates, like dibutyl adipate, diisobutyl adipate, di(2-ethylhexyl) adipate and diisooctyl adipate; phosphates, like tributyl phosphate, triphenyl phosphate, trichloroethyl phosphate and tri(2-ethylhexyl) phosphate; polyesters derived from aliphatic or aromatic dicarboxylic acids and aliphatic diols; and diesters derived from aliphatic diols or glycols and monocarboxylic acids, like diethylene glycol dibenzoate and dipropylene glycol dibenzoate.

Diethylene glycol dibenzoate and dipropylene glycol dibenzoate are the preferred plasticizers.

Silicon dioxide is preferred as component (B).

Among the colorants suitable as component(C) the black colorants are preferred, for instance lamp blacks, oxidic black pigments and organic black colorants. Carbon black is especially preferred.

In a preferred embodiment of the invention the adhesive composition comprises 85-96 % by weight of component (A), 2-4 % by weight of component (B), 1-2 % by weight of component (C) and 0.01-1.0 % by weight of component (D).

The adhesive compositions according to the invention can advantageously be prepared by the following procedure:
Component (A) is placed into a mixing container. A suitable amount of component (D) is added thereto, and a homogenizer or mixer is used to mix the components until they become a uniform liquid. Then components (B) and (C) are gradually added during continued mixing. The finished adhesive is a dark grey paste that is suitable for printing on thermoplastic, and especially TYVEK®, sheets with a nodal adhesive printer.

In a further feature according to the present invention there is provided a process of manufacturing thermoplastic honeycomb core, comprising the steps of
(a) providing a thermoplastic sheet material;
(b) printing nodal lines on the thermoplastic sheet material with an adhesive according to claim 1, cutting the thermoplastic sheet material into sheets and laying up the cut thermoplastic sheets to form a thermoplastic block;
(c) pressuring the thermoplastic block and thereby curing the adhesive;
(d) expanding the thermoplastic into a honeycomb core and framing the honeycomb core; and
(e) heat setting the honeycomb core.

The honeycomb core can be further reinforced with organic resin, for example phenolic resin. The honeycomb core is first dipped in the organic resin, then purged and cured. The resulting honeycomb core can have a density in a range from 1 lb/ft³ (0.016 g/cm³) to 15 lb/ft³ (0.240 g/cm³). Further, the step of reinforcing can be repeated.

The curing step of the dipped and purged honeycomb core should take place at a temperature no greater than 250 °F (121 °C).

The resulting honeycomb core can have cell sizes from from 1/8 inch (0.32 cm) to more than 2 inch (5.08 cm). Further, the honeycomb core can be sliced into slices having a thickness in a range of 0.5 inch (1.3 cm) to 18 inch (45.8 cm).

The thermoplastic sheet material is preferably a spun bonded olefin sheet material made from high density polyethylene fibers, or TYVEK®.

In the step of pressurizing, the thermoplastic block is preferably pressurized with approximately 8 psi (55.2 kPa) at at least room temperature for 12 hours. Further the thermoplastic block can be pressurized at 200 °F (93 °C). The step of heat setting includes gradually raising the temperature of the honeycomb core to 200 °F - 220 °F (93 °C -104 °C) and holding the temperature for 30 minutes.

The present invention is described below in detail with respect to a preferred embodiment thereof and with reference to the accompanying drawings wherein:
Fig. 1 is a comparison of the costs of different honeycomb core substrates;
Fig. 2 is a schematic side view of equipment used for rewinding and trimming thermoplastic substrate material, printing nodal adhesive lines, lay up and pressurizing;
Fig. 3 is a schematic and perspective view of double web printing of the thermoplastic material and the lay up of cut sheets of the thermoplastic material;
Fig. 4 is a side view of an expanding process;

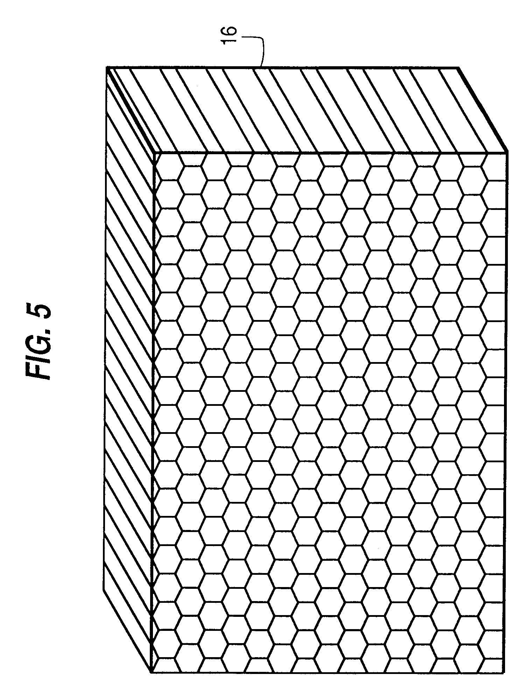

Fig. 5 is a perspective view of an expanded and heat set thermoplastic honeycomb core;
Fig. 6 is a schematic side view of a resin dip/purge unit for reinforcing the thermoplastic honeycomb core; and
Fig. 7 is a graph comparing the bare compressive strength of non-reinforced and phenolic resin coating reinforced TYVEK® honeycomb core.

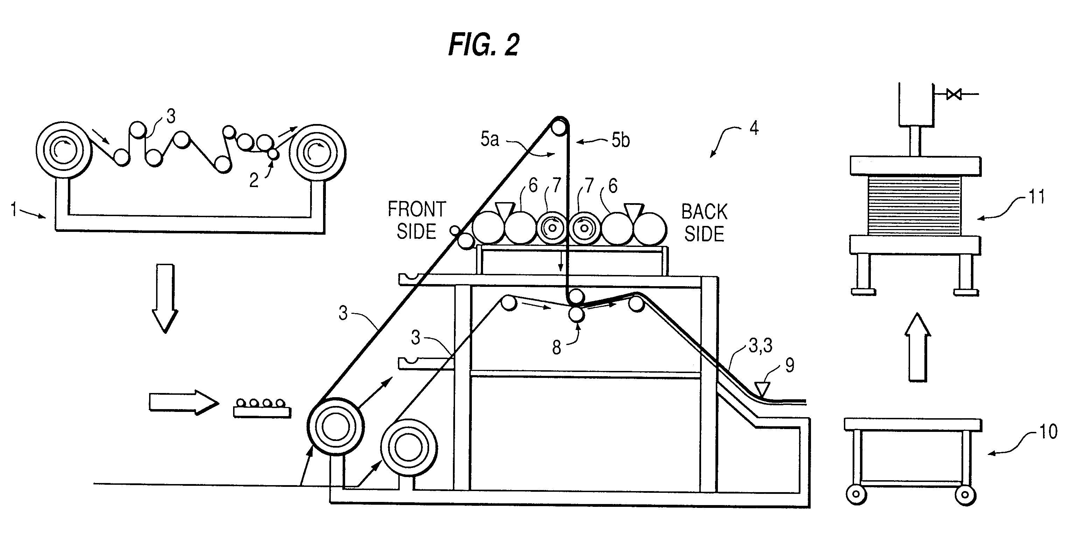

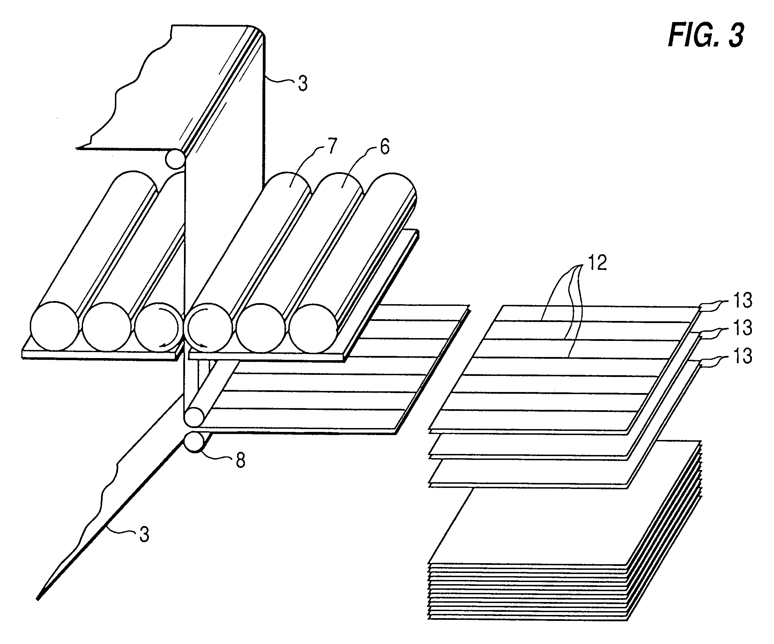

Referring to Fig. 2, a roll of TYVEK® sheet material or web 3 is placed on a mandrel assembly/edge guide unit 1 for rewinding the web to a proper tension and for slicing the web to a proper width and length. A rotary cutter 2 is used to slit the web 3. What results from the unit 1 is two rewound rolls of TYVEK® sheet 3.
As can be seen from Fig. 2, the two rolls of TYVEK® sheet 3 are placed on a double web print system 4. One web 3 is fed upwards about a roller and down between two node rolls 7, which print both the front side 5a and the backside 5b of the one web 3 with nodal lines of the multi-component adhesive. The node roll 7 has the adhesive applied thereto from adhesive rolls 6. Both of the webs 3 are fed between two pinch rollers 8 to be joined together.
Also note Fig. 3. The webs are then cut by a cutter 9 into appropriately sized printed sheets 13 with nodal lines 12 thereon.

The printed sheets 13 are laid up on a lay up table 10 on a continuous basis. A set of these sheets is referred to as a block.

The TYVEK® blocks are then moved to a press 11 and pressed with a pressure of 8 psi ±2 psi (55.2 kPa ± 13.8 kPa), at room temperature for 12 hours in order to cure the nodal line adhesive. The curing process thus laminates the sheets 13 together into a stacked and cured block 14. The curing process can be accelerated by hot pressing the block at 200 °F (93 °C).

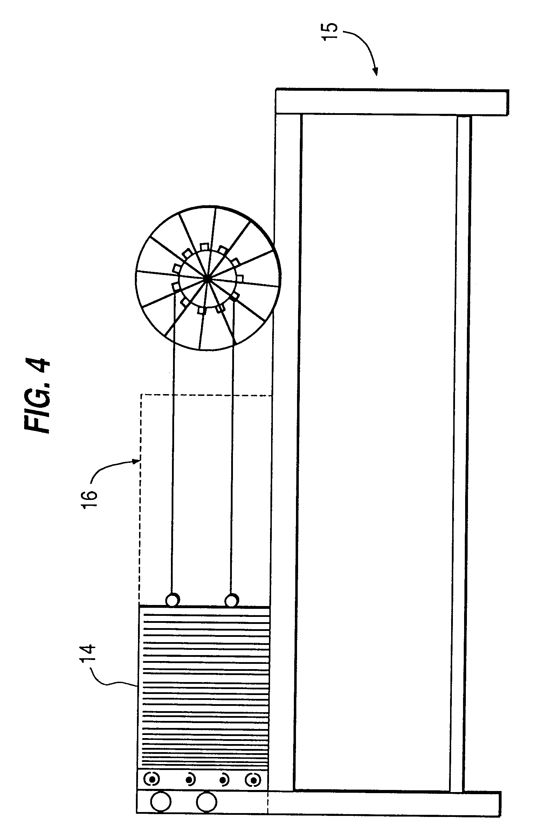

After the nodal line adhesive has been cured, wood cleats are attached to both sides of the TYVEK® block 14. The wood cleats form handles, which are used to fix the TYVEK® block 14 to a honeycomb expansion device 15 for expanding the TYVEK® block 14 into a honeycomb core block. This per se known expanding process is schematically illustrated in Fig. 4. The TYVEK® block 14, unexpanded, is illustrated with solid lines. The block 14 is then pulled to the expanded, and the fully expanded block 16 is outlined with a dashed line in the figure.

If the block has been expanded into a honeycomb block which has the required dimensions, plywood sheet or other lightweight materials that are stable at 220 °F (104 °C) are used to frame the block. The frame supports the TYVEK® honeycomb block 16 and prevents the block from changing its dimensions.

The framed block is then placed in a programmable horizontal curing oven for heat setting. The temperature is gradually raised to 200 °F - 220 °F (93 °C - 104 °C), and held for 30 minutes. This heat sets the TYVEK® honeycomb block 16, which as a result becomes dimensionally stable. The TYVEK® honeycomb core 16 that results can at this point be commercially sold, or the core can be further reinforced by an organic resin coating process.

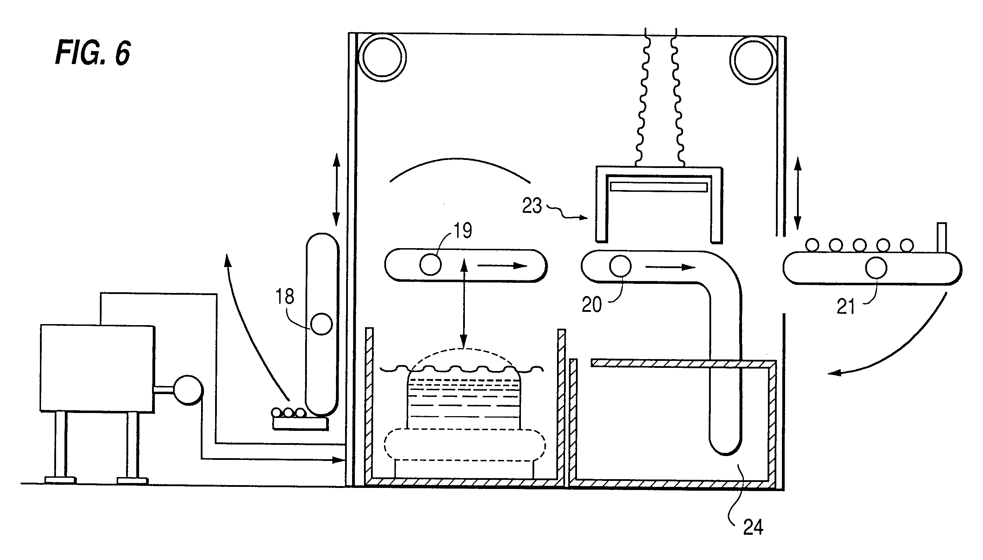

In the organic resin reinforcement process, the TYVEK® block is dipped in organic resin and purged by using a dip/purge unit 17 as illustrated in Fig. 6. The unit 17 is run by a hydraulic oil system, components of which are schematically illustrated to the left of the figure. Four conveyors 18-21 are used to move a TYVEK® honeycomb core block through the dip/purge unit 17. First, the expanded TYVEK® honeycomb block 16 is placed on the conveyor 18 and lifted up and moved towards the conveyor 19. The honeycomb block 16 is transferred to the conveyor 19, which then dips the honeycomb block in an organic resin. The dipping process is performed by lowering and raising the conveyor 19 so that the honeycomb block will be dipped into the resin in a resin tank 22. The dipped block 16 is then transferred to conveyor 20 for purging in a purging unit 23. Purging unit 23 includes an air blower 23a for blowing controlled air at over 100 psi (690 kPa) through the honeycomb block and an isopropyl alcohol tank 2 wherein the honeycomb core is dipped for cleaning. The honeycomb block is then transferred to conveyor 21, which lowers the honeycomb back to the ground. All of the above process is performed automatically. The organic resin has a viscosity which is controlled to be in a range of 50 seconds to 60 seconds, Zahn cup no. 1, and the solid content is about 50 %.

The dipped and purged block is then placed into a cure oven as discussed above. The temperature of the oven and the amount of time involved in the curing cycle depends on the type of organic resin that is selected. However, note that the curing temperature should not exceed 250 °F (121 °C), because of thermal stability limitations of TYVEK®. An explosive proof oven may be required, depending on the resin/solvent selected. Generally, curing will take place at 200 °F - 220 °F (93 °C - 104 °C) for about 60-90 minutes.

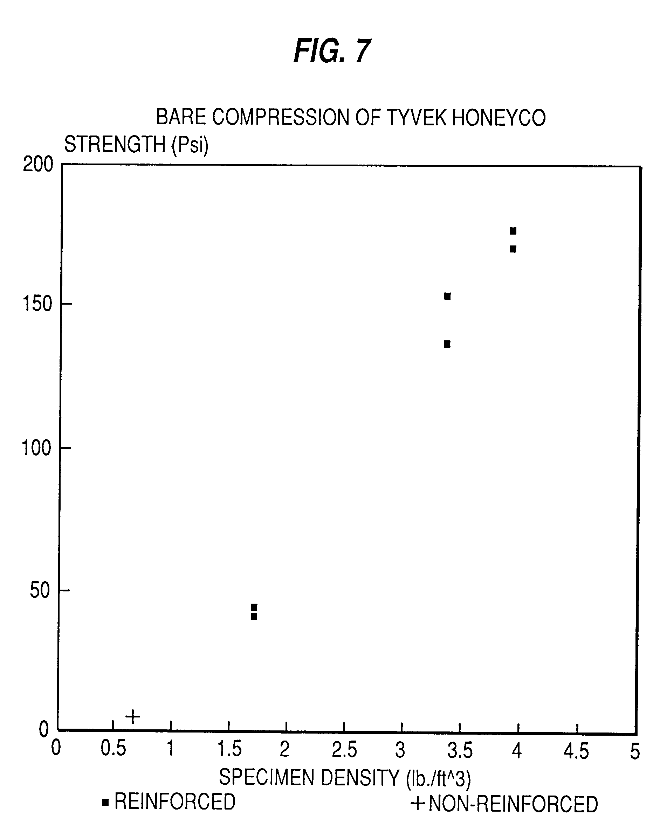

The dipping, purging and curing cycle can be repeated to increase the reinforcement, and thus the density, of the TYVEK® honeycomb core. TYVEK honeycomb core with a density range from 1 lb/ft³ (0.016 g/cm³) to 15 lb/ft³ (0.240 g/cm³) can then be manufactured. The strength of the honeycomb core is significantly increased by the resin coating reinforcement process, as is illustrated by the graph in Fig. 7, which compares the bare compressive strength of non-reinforced TYVEK® honeycomb core with phenolic resin coating reinforced TYVEK® honeycomb core.

Different organic resins are used depending on the properties desired to be imparted to the honeycomb core. For example, resins can be used to make the core flame retardant, ultra violet light insensitive, denser, mechanically stronger, etc.

The resulting TYVEK® honeycomb core can have cell sizes from 1/8 inch (0.32 cm) to more than 2 inch (5.08 cm). Further, the honeycomb core using TYVEK® can be sliced into slices from 0.5 inch (1.3 cm) to 18 inch (45.8 cm) thick.

Thus, with the above invention, it is now possible to manufacture TYVEK® honeycomb core by a chemical bonding and expanding method. Further, there has now been provided a multi-component adhesive which will prevent the failure of expanding TYVEK® block due to nodal line separation and TYVEK® paper failure.

Various modifications of the above multi-component adhesive formulation, as well as the process of manufacturing thermoplastic honeycomb core, will occur to those of ordinary skill in the art without departing from the scope of the present invention as defined in the appended claims, and, as such, should be considered a part of this invention.

### Example:

An adhesive composition comprising
(A) 95.0 % by weight of ELVACE® 40705 (an emulsion containing 54.5 % vinyl acetate/ethylene-copolymer and 45.5 % water, supplied by Reichhold, USA),
(B) 3.16 % by weight of BENZOFLEX® (a mixture of diethylene glycol dibenzoate and dipropylene glycol dibenzoate),
(C) 1.75 % by weight of Cab-O-Sil (silicon dioxide powder) and
(D) 0.09 % by weight of carbon black

is prepared as follows:
Component (A) is placed into a mixing container. Component (D) is added thereto, and a homogenizer or mixer is used to mix the components until they become a uniform liquid.

Then components (B) and (C) are gradually added during continued mixing. The finished adhesive is a dark grey paste that is suitable for printing on thermoplastic, and especially TYVEK®, sheets with a nodal adhesive printer.

The adhesive is used for the preparation of TYVEK® honeycomb core as described above.
Five blocks of honeycomb core of a nominal size each, 18 inch "T" · 60 inch "W" · 30 inch "L", are produced having cell sizes and TYVEK® paper thicknesses of 3/16 inch - 5 mm, 1/4 inch - 5 mm, 3/8 inch - 5 mm, 3/8 inch - 7.6 mm, 3/8 inch - 10 mm ("T" = thickness of the honeycomb core; "W" = transversal direction, perpendicular to core ribbons; "L" = longitudinal direction, parallel to core ribbons).

The results of the core compression testing and the shear strength measurement are given in Tables 1 and 2.
In all cases the term "no coating" refers to bare TYVEK® honeycomb. "One coating" means a thin coating (about 1 mm thick) of phenolic thermosetting resin was applied and cured to increase the strength of the TYVEK honeycomb core, likewise, "two coating" means a second coat of the phenolic resin was applied.

**Table 1**

| Bare Compression Testing | |
|---|---|
| Honeycomb core type | Compression Strength [kPa] |
| 3/16 inch - 5 mm (no coating) | 131 |
| (one coating) | 493 |
| (two coating) | 985 |
| 1/4 inch - 5 mm (no coating) | 66 |
| (one coating) | 427 |
| (two coating) | 492 |
| 3/8 inch - 5 mm (no coating) | 33 |
| (one coating) | |
| (two coating) | 460 |
| 3/8 inch - 7.6 mm (no coating) | 82 |
| (one coating) | 377 |
| (two coating) | 738 |
| 3/8 inch - 10 mm (no coating) | 213 |
| (one coating) | 837 |
| (two coating) | 1115 |

**Table 2**

| Shear Strength | | |
|---|---|---|
| Honeycomb core type | L-Direction Shear Shear Strength [kPa] | W-Direction Shear Shear Strength [kPa] |
| 3/16 inch - 5 mm (no coating) | 138 | 69 |
| (one coating) | 281 | 177 |
| (two coating) | 690 | 384 |
| 1/4 inch - 5 mm (no coating) | 99 | 54 |
| (one coating) | 187 | 143 |
| (two coating) | 296 | 192 |
| 3/8 inch - 5 mm (no coating) | 39 | 30 |
| (one coating) | | |
| (two coating) | 237 | 153 |
| 3/8 inch - 7.6 mm (no coating) | 89 | 59 |
| (one coating) | 256 | 138 |
| (two coating) | 532 | 231 |
| 3/8 inch - 10 mm (no coating) | 148 | 94 |
| (one coating) | 483 | 261 |
| (two coating) | 601 | 345 |

## Claims

1. An adhesive composition comprising
(A) 60-99 % by weight, based on the total composition, of a vinyl acetate/ethylene-copolymer;
(B) 0-30 % by weight, based on the total composition, of a plasticizer;
(C) 0-5 % by weight, based on the total composition, of a thickening agent; and
(D) 0-5 % by weight, based on the total composition, of a coloring agent;
with the proviso that at least 1 % by weight of the total composition consists of said plasticizer or said thickening agent or a mixture of said plasticizer and said thickening agent.

2. An adhesive composition according to claim 1, comprising both said plasticizer and said thickening agent.

3. An adhesive composition according to claim 1, wherein said plasticizer contains diethylene glycol dibenzoate or dipropylene glycol dibenzoate.

4. An adhesive composition according to claim 1, wherein said thickening agent is silicon dioxide.

5. An adhesive composition according to claim 1, wherein said said coloring agent is carbon black.

6. A process of manufacturing thermoplastic honeycomb core, comprising the steps of
(a) providing a thermoplastic sheet material;
(b) printing nodal lines on the thermoplastic sheet material with an adhesive according to claim 1, cutting the thermoplastic sheet material into sheets and laying up the cut thermoplastic sheets to form a thermoplastic block;
(c) pressuring the thermoplastic block and thereby curing the adhesive;
(d) expanding the thermoplastic into a honeycomb core and framing the honeycomb core; and
(e) heat setting the honeycomb core.

7. The process according to claim 6, and further comprising the step of
(f) reinforcing the honeycomb core with organic resin.

8. The process according to claim 7, wherein said step of reinforcing comprises
(f1) dipping the honeycomb core in organic resin;
(f2) purging the honeycomb core; and
(f3) curing the dipped and purged honeycomb core.

9. The process according to claim 6, wherein said thermoplastic sheet material is a spunbonded olefin sheet material made from high density polyethylene fibers.

10. The process according to claim 6, wherein said step of pressurizing comprises pressurizing the thermoplastic block with approximately 8 psi (55.2 kPa) at at least room temperature for 12 hours.
